# EUROPEAN PATENT SPECIFICATION

(11) **EP 0 947 401 B1**
(45) Date of publication and mention of the grant of the patent: **21.01.2004**
(21) Application number: 99400764.9
(22) Date of filing: 30.03.1999
(51) Int. Cl.: B60S 1/04, B60S 1/34

(54) **Pivot structure for vehicle wiper device**
Drehbewegliche Lagerung einer Kraftfahrzeug- Scheibenwischervorrichtung
Structure d'un pivot d'un mécanisme d'essuie-glace de véhicule

(30) Priority: 31.03.1998 JP 10383098
(43) Date of publication of application: 06.10.1999
(73) Proprietor: Mitsuba Corporation, Kiryu-shi, Gunma 376-8555 (JP)
(72) Inventor: Komiyama, Takashi, Kiryu-shi, Gunma (JP)
(74) Representative: Hud, Robert

(56) References cited:
- EP-A- 0 781 691
- DE-A- 4 409 957
- US-A- 3 910 652

## Description

The present invention belongs to the technical field of a pivot structure for a vehicle wiper device with which passenger cars, buses, trucks and the like are equipped.

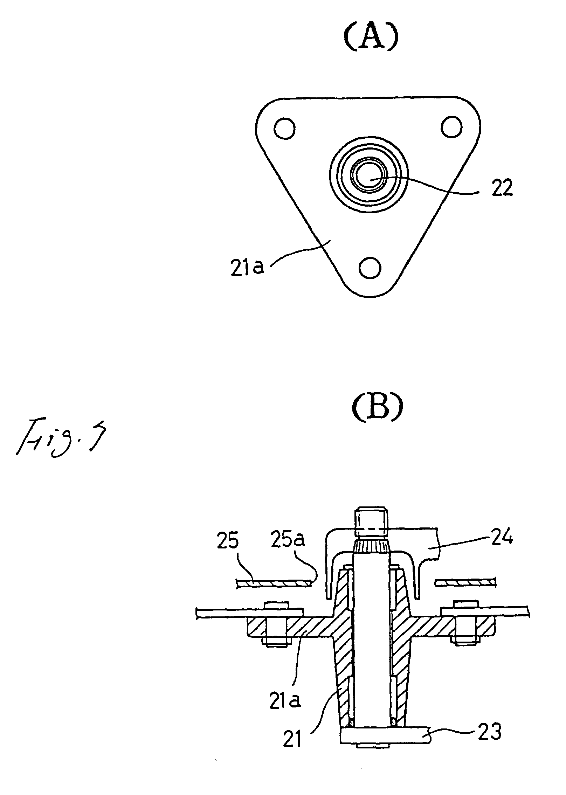

In general, these types of vehicles are equipped with a wiper device for wiping the window surface of a windshield and the like. As shown in FIG. 7, the wiper device is arranged such that a pivot shaft 22 is rotatably supported by a pivot holder 21 fixed to a body (body exterior sheet), a link arm 23 which is coupled with a motor (not shown) is fixed to the base end of the pivot shaft 22, and a wiper arm 24 is fixed to the extreme end of the pivot shaft 22. With this arrangement, when the motor is driven, the wiper arm 24 is reciprocatingly circularly moved about the pivot shaft 22 as a swing support shaft so as to execute a wiping motion.

Incidentally, there is a wiper device arranged such that a pivot holder 21 has a fixing piece 21a formed to a collar shape and fixed to a body and the portion above the fixing piece 21a is covered with a cowl top 25. In this case, the cowl top 25 has a large diameter through-hole 25a so that the pivot holder 21 loosely passes therethrough.

However, the wiper device of the prior art has the following problems. That is, rainwater invaded between the through-hole 25a and the pivot holder 21 enters a wiper drive unit and splashes on a drive link, and foreign matters which are sucked, when a vehicle travels, by the negative pressure in a dash board upper section where the wiper device is mounted invade the dash board upper section through a through-hole formed to a body exterior sheet, and the like and generate noise by interfering with a wiper link, a wiper arm and the like when the wiper device is operated. To overcome the above problems, there has been proposed to form a large diameter regulating section to the pivot holder fixing piece so as to surround the outside periphery of the pivot holder to regulate the invasion of rainwater and foreign matters as well as to dispose a guide path for guiding and discharging invaded rainwater. However, since vehicles are manufactured in two types, that is, in a left-hand-drive type and a right-hand-drive type, two kinds of the pivot holders must be prepared as to a driver side pivot holder and an assistant side pivot holder to cope with left-hand-drive vehicles and right-hand-drive vehicles. Accordingly, there arises a problem to be solved by the present invention that not only the number of parts is increased but also the management of the parts are troublesome.

From EP-A-0781691 is known a pivot structure for a vehicle wiper device, comprising a pivot holder, through which passes a pivot shaft rotating about its axis and having a wiper arm fixed thereto, a fixing piece formed in a collar shape on said pivot holder mounting said pivot holder to a body exterior sheet disposed below a cowl top in an inclined state, and a regulating section formed on an upper surface of the fixing piece which opposes said cowl top and having a large diameter so as to surround the outside periphery of the pivot holder, the regulating section being formed symmetrically to an imaginary line passing the axial center of the pivot shaft on the right side and the left side. Moreover, the fixing piece appears to be suitable for restricting foreign substances invaded from the cowl top.

According to the present invention made to solve these problems in view of the above circumstances, there is provided a pivot structure for a vehicle wiper device in which a pivot holder, through which a pivot shaft having a wiper arm fixed thereto passes so as to rotate about the axis of the pivot shaft, is mounted by fixing a fixing piece, which is formed on the pivot holder in a collar shape, to a body exterior sheet disposed below a cowl top in an inclined state, the pivot structure comprising a regulating section formed on the upper surface of the fixing piece which opposes the cowl top and having a large diameter so as to surround the outside periphery of the pivot holder for restricting a foreign substance invaded from the cowl top, the regulating section being formed symmetrically with respect to an imaginary line as a symmetrical line passing the axial center of the pivot shaft on the right side and the left side, characterized in that the regulating section is divided into a plurality of portions.

According to the pivot structure for the vehicle wiper device of the present invention arranged as described above, the invasion of foreign matters such as rainwater, dead leaves and the like into a dash board upper section can be regulated as well as a guide path is formed to discharge invaded rainwater. Further, the pivot holder can be employed to both left-hand-drive vehicles and right-hand-drive vehicles.

To afford a clearer understanding of the invention, preferred embodiments thereof will now be described referring to the annexed drawings, in which :
FIG. 1 is a perspective view of the main portion of a wiper device of an embodiment of present invention;
FIG. 2A is a plan view of an assistant side pivot hinge section and FIG. 2B is a plan view of a driver side pivot hinge section;
FIG. 3 is a front elevational view, partly in cross section, of the driver side pivot hinge section;
FIG. 4 is a front elevational view, partly in cross section, of the assistant side pivot hinge section;
FIGS. 5A and 5B are front elevational views, partly in cross section, showing the wiper device of another embodiment of the present invention;
FIG. 6 is a plan view showing the wiper device of still another embodiment of the present invention; and
FIG. 7A is a plan view showing the wiper device of prior art and 7B is a front elevational view, partly in cross section, showing the wiper device of prior art.

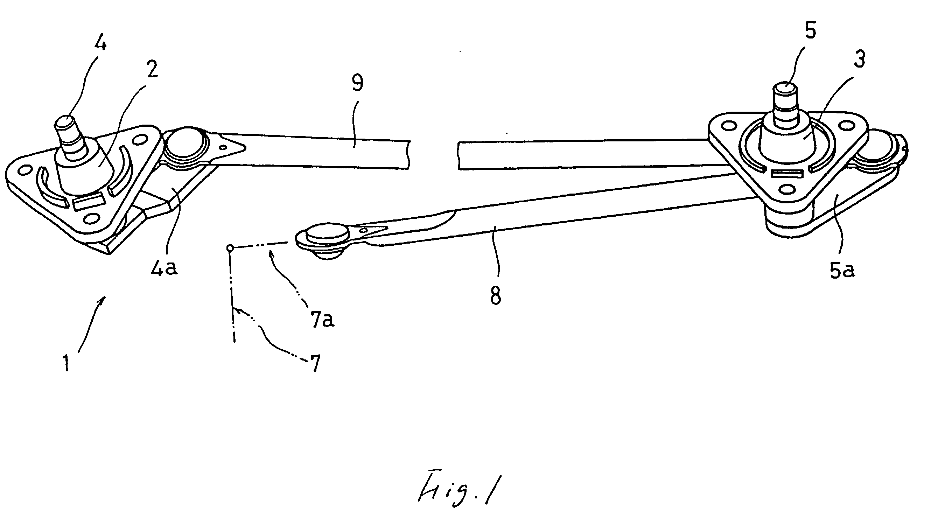

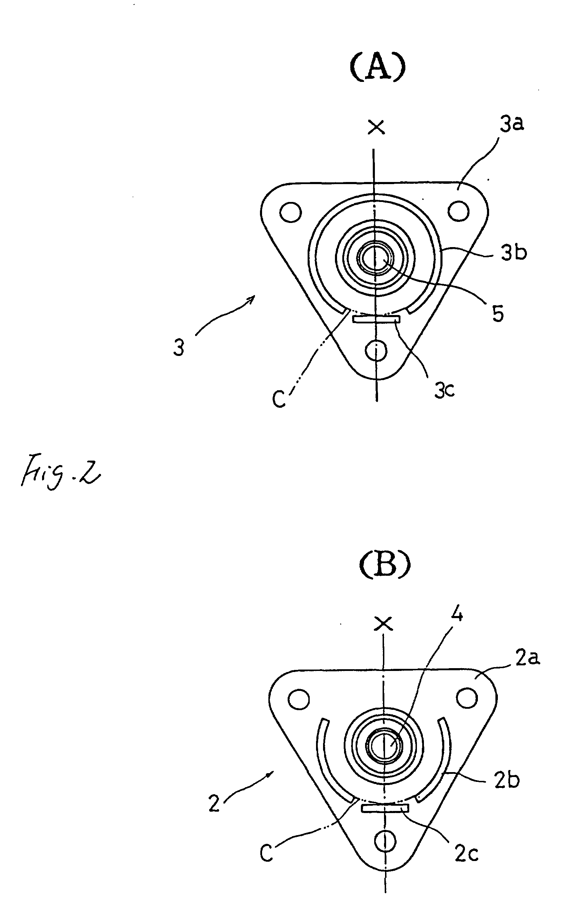

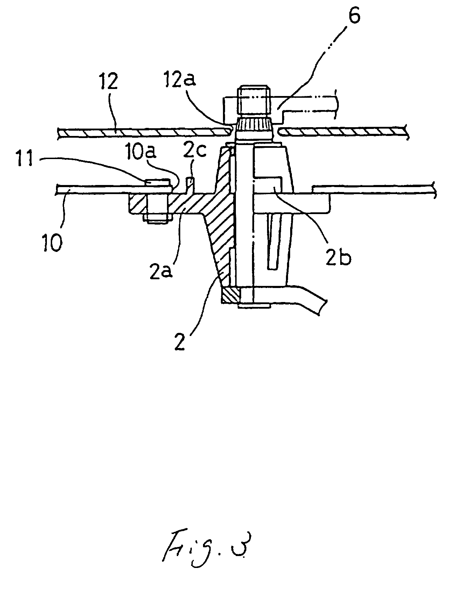

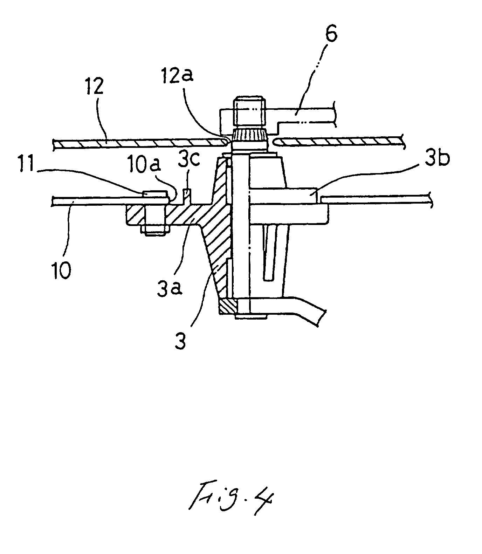

FIG. 1 is a perspective view of the main portion of a wiper device of an embodiment of present invention, FIG. 2A is a plan view of an assistant side pivot hinge section and FIG. 2B is a plan view of a driver side pivot hinge section, FIG. 3 is a front elevational view, partly in cross section, of the driver side pivot hinge section and FIG. 4 is a front elevational view, partly in cross section, of the assistant side pivot hinge section. In the figures, numeral 1 denotes a wiper device for wiping the windshield of a vehicle. The wiper device 1 includes a driver side pivot holder 2 and an assistant side pivot holder 3. Pivot shafts 4, 5 pass through the pivot holders 2, 3 and are supported by the pivot holders 2, 3 so as to rotate about the axes thereof. Wiper arms 6 are fixed to the extreme ends of the pivot shafts 4, 5, respectively, whereas swing links 4a, 5a are fixed to the base ends of the pivot shafts 4, 5, respectively so that the power from the output shaft 7 of a wiper motor (not shown) is transmitted to an output link 7a, a first rod 8, an assistant side swing link 4a, a second rod 9 and a driver side swing link 5a. These arrangements are the same as those of the prior art wiper device.

Although the present invention is embodied to each of the pivot holders 2, 3, first, the assistant side pivot holder 3 will be described. As shown in FIG. 2A and FIG. 4, the pivot holder 3 loosely passes through a through-hole 10a formed to a body exterior sheet 10 from the lower side (body side) thereof and fixed to the body exterior sheet 10 in such a manner that a fixing piece 3a which extends from the outside periphery of the pivot holder 3 to a collar shape is fitted to the body exterior sheet 10 inclined in a forward/backward direction from the lower side thereof and fixedly supported by a bolt 11 as an example of a fixture.

Numeral 12 denotes a cowl top mounted above the body exterior sheet 10. The cowl top 12 has a through-hole 12a formed thereto so that the pivot holder 3 loosely passes through it. First and second regulating ribs 3b and 3c are formed to the fixing piece 3a of the pivot holder 3 which confronts the lower surface of the cowl top 12, respectively to regulate the invasion of foreign matters such as dead leaves and the like into the space between the lower surface of the cowl top 12 and the fixing piece 3a. The first regulating rib 3b is formed to a substantially cylindrical shape projecting toward the cowl top 12 with a diameter larger than the outside shape of the pivot holder 3 and has an opening formed thereto on the inclined side of the pivot holder 3. On the other hand, the second regulating rib 3c is formed linearly at the position of the opening of the first regulating rib 3b with intervals S defined between both the ends of the first regulating rib 3b and both the ends thereof and located in the tangential direction with respect to the imaginary arc C of the first regulating rib 3b so that the second regulating rib 3c forms a discharge path for discharging invaded rainwater and the like to the outside of the regulating ribs. A pair of cutout portions between the first regulating rib 3b and the second regulating rib 3c are formed substantially symmetrically with respect to an imaginary line X as a symmetrical line passing the axial center of the pivot shaft 5 on the right side and the left side thereof so that pivot structure can be used to any of left-hand-drive vehicles and right-hand-drive vehicles.

The driver side pivot holder 2 has the same mounting structure as that of the assistant side pivot holder 3 except that it is mounted to an end of the windshield of the vehicle on the lower portion thereof and fixedly supported by being also inclined in the right and left directions in conformity with the round shapes of a body and the windshield. The regulating ribs of the pivot holder 2 will be described. As shown in FIG. 2B and FIG. 3, first and second regulating ribs 2b and 2c are formed to the fixing piece 2a of the pivot holder 2 which confronts the lower surface of a cowl top 12. The first regulating rib 2b is composed of a pair of substantially arc-shaped ribs having openings at the inclined upper and lower ends thereof, whereas the second regulating rib 2c is formed linearly at the position of the opening at the lower end of the first regulating rib 2b with intervals S defined between both the ends of the first regulating rib 2b and both the ends thereof and located in the tangential direction with respect to the imaginary arc C of the first regulating rib 2b so as to form a discharge path for discharging invaded rainwater and the like.

In the first and second driver side regulating ribs 2b and 2c, a pair of cutout portions are formed substantially symmetrically with respect to an imaginary line X as a symmetrical line passing the axial center of the pivot shaft 4 on the right side and the left side thereof likewise the first and second assistant side regulating ribs 3b and 3c.

When the pivot holders 2, 3 are mounted on any of the left-hand-drive vehicle and the right-hand-drive vehicle whose inclinations in the right and left directions are opposite to each other symmetrically with respect to a line, a discharge path is formed by one of the pair of the cutout portions and the second regulating rib in the tangential direction to discharge invaded rainwater through the discharge path regardless of that the vehicle is inclined in the right direction or in the left direction. As a result, the pivot holder can be easily formed without the need of paying attention to the difference of a shape when it is used to the left-hand-drive vehicle and to the right-hand-drive vehicle.

In the wiper device arranged as described above, the window surface of the windshield is wiped by the wiper arms 6 which are swung by the reciprocating rotations of the pivot shafts 4, 5 driven by the not shown motor. At the time, it is difficult for foreign matters such as rainwater, dead leaves and the like to invade the cowl top from the through-hole 12a thereof as well as even if they invade the cowl top, the invasion of them into a dash board upper section located further inwardly of the cowl top is regulated by the first and second regulating ribs 2b, 2c, 3b and 3c and the rainwater is guided and discharged to a prescribed portion through the cutout. As a result, such a disadvantage that noise is generated by the contact of the foreign matters invaded an inner portion with the drive link and the like of a wiper drive unit.

In the wiper device to which the present invention is embodied, the invasion of the foreign matters into the inner portion of the wiper device can be prevented by the first and second regulating ribs 2b, 2c, 3b and 3c. Further, since the second regulating ribs 2c, 3c are linearly formed at the positions of the openings of the first regulating ribs 2b and 3b with the intervals S defined between both the ends of the first regulating ribs 2b and 3b and both the ends of thereof and located in the tangential direction with respect to the imaginary arcs C of the first regulating rib 2b and 3b so as to form the discharge path of the rainwater. Thus, the storage of the rainwater can be regulated. Further, the second regulating ribs 2b, 2c, 3b and 3c are formed symmetrically with respect to the imaginary lines X as the symmetrical lines passing the axial centers of the pivot shafts on the right side and the left side. Therefore, the wiper device can be employed to any of the left-hand-drive vehicle and the right-hand-side vehicle, whereby the number of parts can be reduced and the parts can be simply managed accordingly.

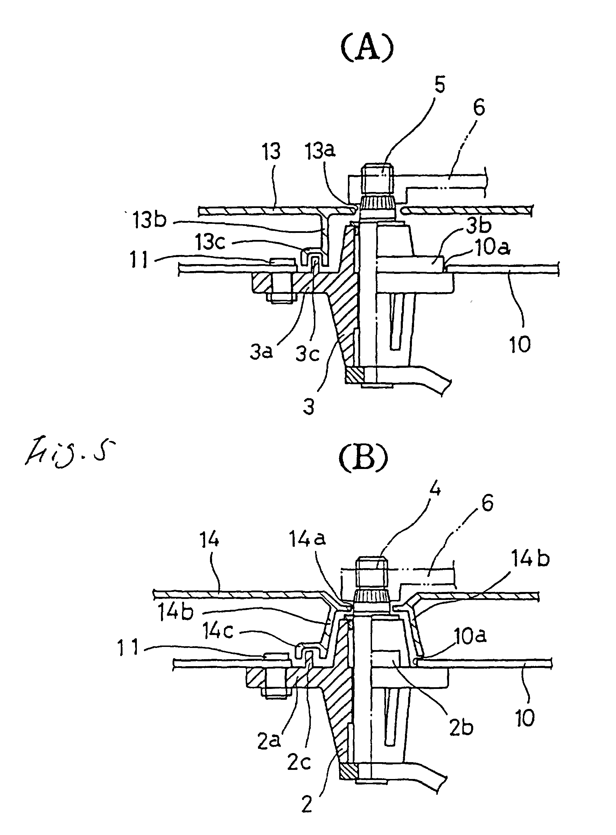

The present invention is not limited to the above embodiment and the cowl tops mounted above the body exterior sheet can be devised as shown in FIG. 5A and FIG. 5B which illustrate the wiper device of another embodiment of the present invention. More specifically, as shown in FIG. 5A, an assistant side cowl top 13 is mounted to a body exterior sheet 10 with a pivot holder 3 loosely passing through the through-hole 13a of the assistant side cowl top 13 as well as 13 has an extending section 13b which projects downward from the surface of the cowl top 13 which confronts first and second regulating ribs 3b and 3c toward the second regulating rib 3c around the outside periphery of a pivot holder 3. The extending section 13b has a covering section 13c formed to the lower end edge thereof and the covering section 13c has a substantially gate-shaped cross section in the state that the extending section 13b bulges to have of a large diameter. Then, the covering section 13c is fitted over the second regulating rib 3c in a labyrinth fashion.

As to a driver side cowl top 14, an extending section 14b projects from the through-hole 14a of the driver side cowl top 14, through which a pivot holder 2 loosely passes, toward first and second regulating ribs 2b and 2c so as to surround the outside periphery of the pivot holder 2. The extending section 14b has a covering section 14c formed to the lower end edge thereof and the covering section 14c has a substantially gate-shaped cross section in the state that the extending section 14b bulges to have of a large diameter. Then, the covering section 14c is fitted over the second regulating rib 2c in a labyrinth fashion.

With the above arrangements, even if foreign matters such as dead leaves and the like invade from the through-holes 13a and 14a of the cowl tops 13 and 14, the invasion thereof can be regulated by not only the regulating ribs but also the covering sections 13c and 14c of the cowl tops 13 and 14, whereby the invasion of the foreign matters can be more reliably regulated.

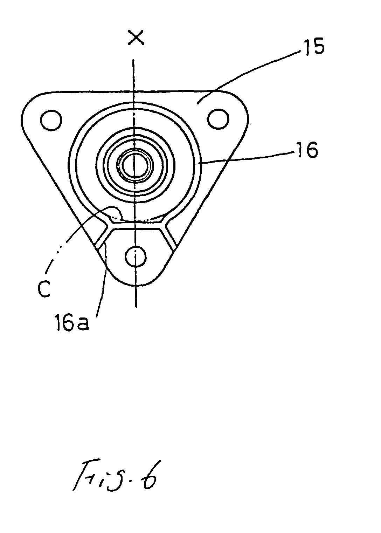

Further, as shown in FIG. 6, an annular groove 16 may be formed on the fixing piece 15 of the pivot holder in place of the regulating rib. In this case, discharge grooves 16a are formed from the annular groove 16 in a radial direction symmetrically with respect to the right and left sides, and the invasion of foreign matters such as dead leaves and the like can be regulated by arranging the annular groove 16 and a projecting section extending from a cowl top downward in the labyrinth fashion.

## Claims

1. A pivot structure for a vehicle wiper device, comprising a pivot holder (2,3), through which passes a pivot shaft (4,5) rotating about its axis and having a wiper arm fixed thereto, a fixing piece (2a,3a) formed in a collar shape on said pivot holder (2,3) mounting said pivot holder (2,3) to a body exterior sheet (10) disposed below a cowl top (12) in an inclined state, and a regulating section (2b,2c ; 3b,3c ; 16) formed on an upper surface of the fixing piece (2a,3a) which opposes said cowl top (12) and having a large diameter so as to surround the outside periphery of the pivot holder (2,3) for restricting a foreign substance invaded from the cowl top (12), said regulating section (2b, 2c ; 3b, 3c ; 16) being formed symmetrically to an imaginary line (x) as a symmetrical line passing the axial center of the pivot shaft (4,5) on the right side and the left side, **characterized in that** said regulating section (2b,2c ; 3b,3c ; 16) is divided into a plurality of portions.

## Patentansprüche

1. Drehzapfenkonstruktion für eine Fahrzeugscheibenwischervorrichtung, umfassend einen Drehzapfenhalter (2,3), durch den eine Drehzapfenwelle (4,5) hindurchführt, welche sich um ihre eigene Achse dreht und an der ein Wischerarm angebracht ist, ein Befestigungsstück (2a,3a), das in einer Bundform an dem Drehzapfenhalter (2,3) ausgeformt ist und den Drehzapfenhalter (2,3) mit einem Karosserie-Außenblech (10) verbindet, welches sich in einer geneigten Ebene unter einem Haubenoberteil (12) befindet, und eine Regelsektion (2b,2c; 3b3c; 16), die auf einer Oberfläche des Befestigungsstückes (2a,3a), welche dem Haubenoberteil (12) gegenüber liegt, ausgeformt ist und einen großen Durchmesser in der Gestalt aufweist, dass sie den äußeren Rand des Drehzapfenhalters (2,3) umgibt, um die Bewegung eines Fremdkörpers zu begrenzen, der vom Haubenoberteil (12) aus eingedrungen ist, wobei die Regelsektion (2b,2c; 3b3c; 16) symmetrisch entlang einer gedachten Linie (x) als eine symmetrische Linie, welche um die axiale Mitte der Drehzapfenwelle (4,5) auf der rechten und auf der linken Seite herum verläuft, ausgeformt ist, **dadurch gekennzeichnet, dass** die Regelsektion (2b,2c; 3b3c; 16) in mehrere Abschnitte unterteilt ist.

## Revendications

1. Structure de pivotement pour un dispositif d'essuie glace de véhicule, comprenant un support de pivot (2, 3), traversé par un arbre de pivotement (4, 5) tournant autour de son axe et auquel est fixé un bras d'essuyage, une pièce de fixation (2a, 3a) en forme de collier qui est formée sur le dit support de pivot (2, 3) pour le montage de ce support de pivot (2, 3) sur une feuille extérieure (10) du corps disposée au-dessous d'une partie supérieure de chapeau (12) dans une position inclinée, et une section de régulation (2b, 2c ; 3b, 3c ; 16) formée sur une surface supérieure de la pièce de fixation (2a, 3a) en regard de la partie supérieure du chapeau (12) et présentant un grand diamètre afin d'entourer la périphérie extérieure du support de pivot (2, 3) afin de limiter l'entrée d'une substance étrangère depuis la partie supérieure de chapeau (12), ladite section de régulation (2b, 2c ; 3b, 3c ; 16) étant formée symétriquement par rapport à une ligne imaginaire (x) qui constitue un axe de symétrie passant par le centre axial de l'arbre de pivotement (4, 5) sur le côté droit et sur le côté gauche, **caractérisée en ce que** la dite section de régulation (2b, 2c ; 3b, 3c ; 16) est divisée en plusieurs parties.
